# EUROPEAN PATENT SPECIFICATION

(11) **EP 0 837 906 B1**
(45) Date of publication and mention of the grant of the patent: **21.03.2001**
(21) Application number: 96923656.1
(22) Date of filing: 05.07.1996
(51) Int. Cl.: C08L 23/04

(54) **PROCESSING AND TOUGHENING OF ETHYLENE COPOLYMER MATERIALS**
VERARBEITUNG UND ERHÖHUNG DER ZÄHIGKEIT VON AETHYLENCOPOLYMEREN
TRAITEMENT ET DURCISSEMENT DE MATERIAUX EN COPOLYMERE D'ETHYLENE

(30) Priority: 07.07.1995 US 499264
(43) Date of publication of application: 29.04.1998
(73) Proprietor: ExxonMobil Research and Engineering Company, Annandale, New Jersey 08801 (US)
(72) Inventor: PEIFFER, Dennis, George, Annandale, NJ 08801 (US); CHLUDZINSKI, James, Joseph, Whitehouse, NJ 08889 (US); LUE, Ching-Tai, Houston, TX 77062 (US); ERDERLY, Thomas, Craig, Baytown, TX 77521 (US)
(74) Representative: Somers, Harold Arnold
(86) International application number: US9611309
(87) International publication number: WO9703126

(56) References cited:
- EP-A- 0 393 753
- WO-A-95/13321
- FR-A- 2 158 564
- GB-A- 1 171 085

## Description

The present invention relates to enhancing the toughness and processability of polyolefin polymers and copolymers that have been prepared using single-site catalysts.

In recent years, a new class of polyolefin and polyolefin copolymers has been developed based on use of the so-called single site catalysts. These catalysts, which are organo-metallic coordination compounds of cyclopentadienyl derivatives of Group IVB metals of the Periodic Table of the Elements (56th Ed. of the Handbook of Chemistry and Physics, CRC Press (1975)), produce polyolefins that possess a more narrow molecular weight distribution than can be achieved with conventional Ziegler-Natta type catalysts. This narrow molecular weight distribution results in polymer materials that have better physical properties than that achieved with typical Ziegler-Natta type catalysts.

Notwithstanding these improved physical properties however, there still remains a need to further toughen polymers prepared from single site catalysts. Additionally, because of the narrow molecular weight distribution of these materials, they tend to be more difficult to process. Consequently, there also is a need to provide a method for enhancing the processability of polyolefins and polyolefin copolymers prepared with single site catalysts.

WO95/13321 describes a polymer blend that exhibits improved heat sealing properties, while maintaining other desirable properties such as strength of the seal formed. The polymer blend is of a component (A), being a metallocene-catalysed polymer and a component (B), being a conventional Ziegler-Natta catalysed polymer generally having a molecular weight of from 4 x 10⁴ to 3 x 10⁵. "Metallocene" is defined as containing one or more cyclopentadienyl moieties in combination with a transition metal.

In accordance with the present invention there is provided a polymer composition of improved toughness comprising a major amount of an ethylene alpha olefin copolymer prepared using a single site catalyst of a cyclopentadienyl derivative of a Group IVB metal; and a minor amount of a second polymer or copolymer having a weight average molecular weight in the range of 1,000 to 20,000 and from 0.1 to 200 milli-equivalents of pendant ionic groups (per 100g of the second polymer or copolymer) selected from carboxylate, phosphate and sulfonate groups that are substantially 50% metal, amine or ammonia neutralized, the composition having improved toughness over that of the ethylene alpha olefin copolymer.

The polymers useful in the present invention are ethylene alpha olefin copolymers that have been prepared using the said single site catalysts, especially those described in U.S. Patent 5,391,629.

Typically, the ethylene alpha olefin copolymers will have weight average molecular weights of between about 10,000 to about 2 million and preferably between about 50,000 to about 300,000. Also, these ethylene alpha olefin copolymers, generally will contain 30 to 90% ethylene with the balance being an alpha olefin of from 3 to 12 carbon atoms. Preferrably, the alpha olefin has 3 or 4 carbon atoms.

Preferably, the low molecular weight ionomeric polymer or copolymer, employed has a weight average molecular weight in the range 2,000 to 10,000.

The second (ionomeric) polymer or copolymer will preferably have from 1.0 to 100 milli-equivalents of pendant ionomeric groups per 100g of the second polymer/copolymer. Preferably, when the ionomeric groups are metal-neutralized, the metal is a Group IA, IIA, IB or IIB metal (see the previously cited Table of Elements).

The amount of ionomeric polymer or copolymer will preferably be below 20 weight % based on the total weight of the composition, very preferably from 0.5 to 20 wt%, most preferably from 0.5 to about 10.0 weight %.

Ionomeric polymers and copolymers especially suitable in the practice of the present invention include sulfonated polystyrene, sulfonated t-butyl polystyrene, sulfonated ethylene copolymers, sulfonated propylene copolymers, sulfonated styrene-acrylonitrile copolymers, sulfonated styrene-methyl methacrylate copolymers, sulfonated polyisobutylene, sulfonated ethylene-propylene terpolymers, sulfonated polyisoprene, and sulfonated elastomers and their copolymers. A preferred carboxylate ionomeric is ethylene-acryilic acid copolymer.

The compositions of the present invention can be prepared by any convenient method. For example, the compositions can be prepared by mixing in a suitable blender such as a Brabender mixer.

The following examples illustrate the invention.

### Examples 1 to 5

An ethylene-butene copolymer prepared using a single site catalyst and having a melt index of 4.5, a density of 0.873 g/cc and a polydispersity of about 2.2 was melt blended with varying amounts of an ethylene-acrylic acid copolymer having a weight average molecular weight of 2000 g/mole which were sodium and zinc neutralized, respectively. The melt processing was performed in a Brabender mixer heated at 193°C. The materials were mixed for 5 minutes at 100 RPM. The material was cooled to room temperature, cut into small pieces and subsequently compression molded (193°C) into tensile specimens.

The blends were formed into final form via compression molding into approximately 5.1cm x 5.1cm x 0.051cm (2" x 2" x 0.02") pads using the following conditions; 2 minute preheat at 193°C, followed by 3 minute press cycle at 0.40 GPa (29 tons) and 193°C, and finally 4 minute cooling to room temperature (again at 0.40 GPa (29 tons) pressure). The appropriate size sample for the tensile testing measurements are cut from these pads.

The mechanical properties were obtained from an Instron® Tensile Tester with a clamp speed of 0.2 cm/min.

Table 1 which follows lists typical mechanical property values for the copolymer into which varying amounts of the low molecular weight ionomers (sodium and zinc salts) were melt blended. Also included in the table for comparison purposes are the mechanical properties of unblended polymer.

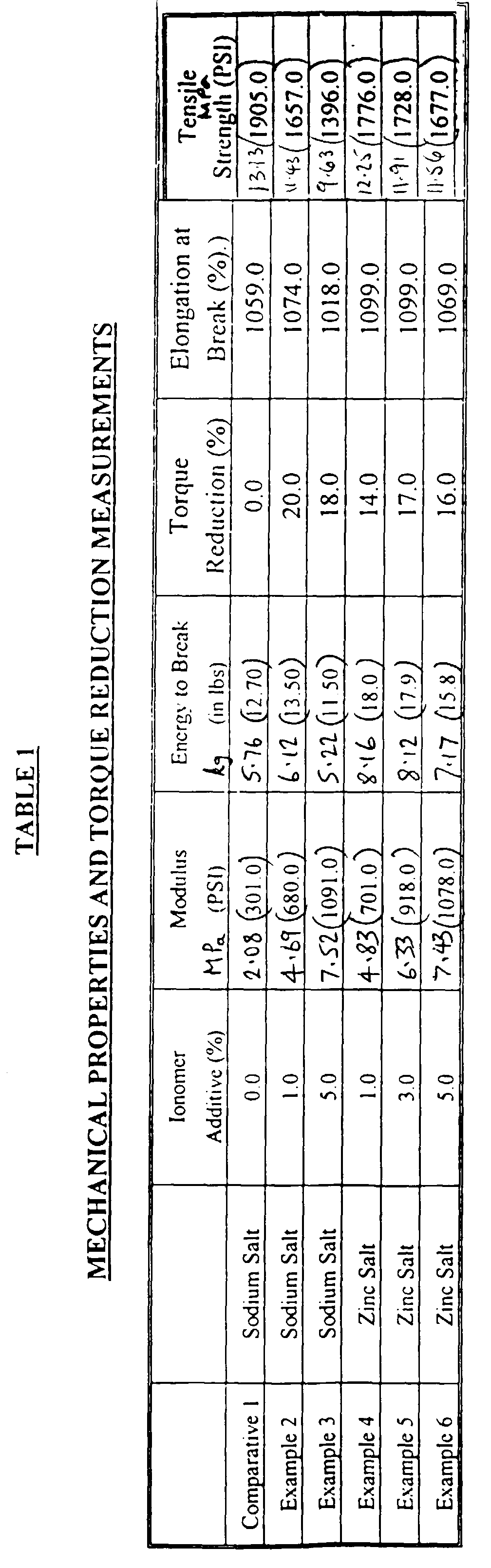

The data confirms that addition of a low molecular weight ionomer to the ethylene copolymer product markedly reduces the torque and, therefore, enhanced processability is observed. In addition, the solid state properties show an enhancement in mechanical properties, i.e., toughness.

## Claims

1. A polymer composition of improved toughness comprising a major amount of an ethylene alpha olefin copolymer prepared using a single site catalyst of a cyclopentadienyl derivative of a Group IVB metal; and a minor amount of a second polymer or copolymer having a weight average molecular weight in the range of 1,000 to 20,000 and from 0.1 to 200 milli-equivalents of pendant ionic groups (per 100g of the second polymer or copolymer) selected from carboxylate, phosphate and sulfonate groups that are substantially 50% metal, amine or ammonia neutralized, the composition having improved toughness over that of the ethylene alpha olefin copolymer.

2. The composition of claim 1, wherein the second polymer or copolymer has a weight average molecular weight in the range of 2,000 to 20,000.

3. The composition of claim 1 or claim 2, wherein the second polymer or copolymer is present in an amount ranging from 0.5 to 20 wt.% based on the total weight of the composition.

4. The composition of any preceding claim, wherein the ionic group is a carboxylate group.

5. The composition of any preceding claim, wherein the ionic group is metal neutralized.

6. The composition of any preceding claim, wherein the alpha olefin of the ethylene alpha olefin polymer has from 3 to 12 carbon atoms.

7. The composition of any preceding claim, wherein the second polymer is an ethylene-acrylic acid copolymer.

## Patentansprüche

1. Polymerzusammensetzung mit verbesserter Zähigkeit, die eine größere Menge Ethylen/α-Olefin-Copolymer, das unter Verwendung eines Katalysators eines Cyclopentadienylderivat eines Gruppe IVB Metalls mit einer aktiven Stelle (single site) hergestellt ist, und eine kleinere Menge zweites Polymer oder Copolymer mit einem durchschnittlichen gewichtsmäßigen Molekulargewicht im Bereich von 1 000 bis 20 000 und 0,1 bis 200 Milliäquivalenten von anhängigen ionischen Gruppen (pro 100 g des zweiten Polymers oder Copolymers) ausgewählt aus Carboxylat-, Phosphat- und Sulfonatgruppen, die im Wesentlichen zu 50 % metall-, amin- oder ammoniakneutralisiert sind, umfasst, wobei die Zusammensetzung verbesserte Zähigkeit gegenüber derjenigen des Ethylen/α-Olefin-Copolymers aufweist.

2. Zusammensetzung nach Anspruch 1, bei der das zweite Polymer oder Copolymer ein durchschnittliches gewichtsmäßiges Molekulargewicht im Bereich von 2 000 bis 20 000 aufweist.

3. Zusammensetzung nach Anspruch 1 oder Anspruch 2, bei der das zweite Polymer oder Copolymer in einer Menge im Bereich von 0,5 bis 20 Gew.-%, bezogen auf das Gesamtgewicht der Zusammensetzung, vorhanden ist.

4. Zusammensetzung nach einem der vorhergehenden Ansprüche, bei der die ionische Gruppe eine Carboxylatgruppe ist.

5. Zusammensetzung nach einem der vorhergehenden Ansprüche, bei der die ionische Gruppe metallneutralisiert ist.

6. Zusammensetzung nach einem der vorhergehenden Ansprüche, bei der das α-Olefin des Ethylen/α-Olefin-Polymers 3 bis 12 Kohlenstoffatome aufweist.

7. Zusammensetzung nach einem der vorhergehenden Ansprüche, bei der das zweite Polymer ein Ethylen/Acrylsäure-Copolymer ist.

## Revendications

1. Composition polymère de ténacité améliorée comprenant une quantité majeure d'un copolymère d'éthylène et d'alpha-oléfine préparé en utilisant un catalyseur à site unique formé d'un dérivé cyclopentadiénylique d'un métal du groupe IVB ; et une quantité mineure d'un second polymère ou copolymère ayant un poids moléculaire moyen en poids dans la plage de 1 000 à 20 000 et 0,1 à 200 milliéquivalents de groupes ioniques pendants (par 100 g du second polymère ou copolymère) choisis parmi les groupes carboxylate, phosphate et sulfonate qui sont neutralisés sensiblement à 50 % par un métal, une amine ou de l'ammoniac, la composition ayant une meilleure ténacité que celle du copolymère d'éthylène et d'alpha-oléfine.

2. Composition selon la revendication 1, dans laquelle le second polymère ou copolymère a un poids moléculaire moyen en poids dans la plage de 2 000 à 20 000.

3. Composition selon la revendication 1 ou 2, dans laquelle le second polymère ou copolymère est présent en quantité allant de 0,5 % à 20 % en poids par rapport au poids total de la composition.

4. Composition selon l'une quelconque des revendications précédentes, dans laquelle le groupe ionique est un groupe carboxylate.

5. Composition selon l'une quelconque des revendications précédentes, dans laquelle le groupe ionique est neutralisé par un métal.

6. Composition selon l'une quelconque des revendications précédentes, dans laquelle l'alpha-oléfine du polymère d'éthylène et d'alpha-oléfine a 3 à 12 atomes de carbone.

7. Composition selon l'une quelconque des revendications précédentes, dans laquelle le second polymère est un copolymère d'éthylène et d'acide acrylique.
